Europäisches Patentamt

**European Patent Office**

**Office européen des brevets**

(19)

(11) Veröffentlichungsnummer : **0 026 866**
**B1**

(12) # EUROPÄISCHE PATENTSCHRIFT

(45) Veröffentlichungstag der Patentschrift :
**11.05.83**

(51) Int. Cl.³ : **H 02 J 7/04**, H 02 J 7/10,
**G 05 F 1/20**

(21) Anmeldenummer : **80105628.4**

(22) Anmeldetag : **19.09.80**

(54) **Batterieladegerät.**

(30) Priorität : **04.10.79 DE 2940172**

(43) Veröffentlichungstag der Anmeldung :
**15.04.81 Patentblatt 81/15**

(45) Bekanntmachung des Hinweises auf die Patenterteilung : **11.05.83 Patentblatt 83/19**

(84) Benannte Vertragsstaaten :
**AT BE CH FR IT LI LU NL**

(56) Entgegenhaltungen :
**DE A 1 901 859**
**DE A 2 609 435**
**DE B 1 275 665**
**GB A 1 500 444**
**US A 3 623 139**

(73) Patentinhaber : **Fried. Krupp Gesellschaft mit beschränkter Haftung**
**Altendorfer Strasse 103**
**D-4300 Essen 1 (DE)**

(72) Erfinder : **Seeger, Herbert**
**Langeoogweg 1**
**D-4300 Essen 1 (DE)**

Jouve, 18, rue St-Denis, 75001 Paris, France

Batterieladegerät

Die Erfindung bezieht sich auf eine Einrichtung zum Laden einer Akkumulatorenbatterie aus einem Spannungsschwankungen aufweisenden Wechselstromnetz über eine Brücken-Gleichrichter-Anordnung mit gesteuerten Gleichrichtern mit einem Regler, der die Phasenlage der den gesteuerten Gleichrichtern zugeführten Zündspannungen in Abhängigkeit von der Batteriespannung und vom Ladestrom beeinflußt, und mit wenigstens einem der Brücken-Gleichrichter-Anordnung vorgeschalteten Transformator.

Es sind Batterieladegeräte gemäß dem Oberbegriff des Patentanspruchs bekannt, die bei Änderung der Höhe der Wechselspannung (z. B. – 30 % bis + 25 % von der Nennspannung) den Ladestrom und die Ladespannung mittels Phasenanschnitt steuern (DE-B-1 275 665).

Bei solchen Batterieladegeräten ist der Aufwand an Glättungsmitteln für den Ladestrom sehr groß. Hinzu kommt, daß, wenn die Eingangsspannung über der Nennspannung liegt, mit großem Phasenanschnitt gearbeitet wird, wodurch die einzelnen Bauteile für eine große Scheinleistung ausgelegt sein müssen.

Hier will die Erfindung Abhilfe schaffen. Die Erfindung, wie sie im Anspruch 1 gekennzeichnet ist, löst die Aufgabe, ein eine geringe Scheinleistung aufweisendes Batterieladegerät zu schaffen, bei dem das Transformator-Übersetzungsverhältnis in Abhängigkeit von der Höhe der Eingangsspannung von einem Begrenzer einstellbar ist.

Die durch die Erfindung erreichten Vorteile sind im wesentlichen darin zu sehen, daß durch die geringe Blindstromaufnahme des Batterieladegerätes die einzelnen Bauelemente des Batterieladegerätes klein dimensioniert werden können, daß das Netz nur wenig Scheinleistung zu liefern braucht und daß die Glättungsdrossel, da immer mit kleinem Phasenanschnitt gearbeitet wird, nochmals kleiner dimensioniert werden kann.

Nach Anspruch 2 sind nur wenige Bauelemente für die Spannungsbegrenzung des Ladekreises erforderlich.

Nach Anspruch 3 ist eine zuverlässige, den Augenblickswert mittels der Zener-Diode erfassende Steuerung der Spannungsbegrenzung möglich.

Ein Ausführungsbeispiel der Erfindung ist in der Zeichnung dargestellt und wird im folgenden näher beschrieben. Es zeigt

Figur 1 einen Wirkschaltplan eines Batterieladegerätes,

Figur 2 einen Wirkschaltplan eines Begrenzers des Batterieladegerätes,

Figur 3 bis 16 Liniendiagramme zur Erläuterung der Strom- und Spannungsladung eines Akkumulators.

Das Ladegerät besitzt eingangsseitig einen Transformator 1, dessen Sekundärseite zwei symmetrische Wicklungsanzapfungen aufweist.

Die Sekundärwicklung des Transformators 1 bildet den Diagonalzweig eines gesteuerten Gleichrichtergerätes, das aus vier Thyristoren 2sa, 2sb, 2ba, 2bb besteht. An dem Pluspol des Gleichrichtergerätes ist über einen Gegenkopplungswiderstand 3 der Pluspol des Akkumulators 4 angeschlossen. Vor dem Minuspol des Gleichrichtergerätes und hinter den diesem zugeordneten Thyristoren 2ba, 2bb liegt jeweils die Primärwicklung eines Stromwandlers 6. Die beiden Stromwandler 6 besitzen einen gemeinsamen Eisenkern. An den Anoden der dem Minuspol des Gleichrichtergerätes zugeordneten Thyristoren 2ba, 2bb ist jeweils eine der beiden Wicklungsanzapfungen des Transformators 1 über jeweils eine Gleichrichterdiode 7a, 7b geführt. Die dem Minuspol des Gleichrichtergerätes zugeordneten Thyristoren 2ba, 2bb stehen mit ihren Ansteuereingängen mit einem Begrenzer 8 in Verbindung, dessen Signaleinganganschluß mit der Sekundärseite des Transformators 1 verbunden ist. Die dem Pluspol des Gleichrichtergerätes zugeordneten Thyristen 2sa, 2sb stehen mit ihren Ansteuereingängen mit der Sekundärseite des Transformators 1, mit dem Akkumulator 4 und mit den Stromwandlern 6 in Verbindung und werden in Abhängigkeit des Ladestromes und der Batteriespannung angesteuert.

Die Ladestrom- und Ladespannungssteuerungseinrichtung ist wie folgt aufgebaut: Die beiden Sekundärwicklungen des Stromwandlers 6 sind in Reihenschaltung geschaltet und mit einer Graetzbrücke 9 verbunden. Dieser Graetzbrücke 9 ist ein Spannungsteiler 10 nachgeschaltet. Der Minuspol des Spannungsteilers 10 ist mit dem Minuspol des Akkumulators 4 verbunden. Der Akkumulator bildet auch einen Diagonalzweig einer Brücke, die drei Widerstände 11a, 11b, 12 und eine Zener-Diode 13 aufweist. In dem Brückzweig der Brücke, der mit dem Minuspol des Akkumulators 4 verbunden ist, liegt die Zener-Diode 13 in Sperrichtung zum Akkumulator 4. An den Ausgang der Brücke ist ein Thyristorschalter 14 mit seinen Steuereingängen angeschlossen. Der Arbeitszweig dieses Thyristorschalters 14 liegt im Ausgang einer Gleichrichterbrücke 15. Dieser Gleichrichterbrücke 15 ist ein Steuertransformator 16 vorgeschaltet, der zwei Sekundärwicklungen und eine Primärwicklung besitzt. In Reihe zu der Primärwicklung ist ein Kondensator 17 geschaltet. Parallel zur Primärwicklung und des Kondensators 17 liegt ein Entladewiderstand 18. Die Primärwicklung des Steuertransformators 16 ist über den Kondensator 17 und eine Diode 19 mit der Sekundärwicklung des Transformators 1 verbunden. Durch diese Beschaltung des Steuertransformators 16 wird der Kondensator 17 bei einer positiven Halbwelle aufgeladen und bei einer negativen Halbwelle entlädt sich der Kondensator 17 über den Entladewiderstand und die Primärwicklung des Steuertransformators 16. Der Steuertransformator kann dadurch nur eine kleine Leistung übertragen (Kurzschlußfest). An der Sekundärwicklung des Transformators 1 ist außerdem ein 90° Phasendrehglied 20 geschaltet, das zwei Induktivitäten und zwei Widerstände aufweist. Die 90° bleiben in etwa erhalten, wenn der Frequenzbereich zwischen 15 bis 60 Hz liegt. Im Diagonalkreis des 90° Phasendrehgliedes 20 liegt ein Signalgebertransformator 21 mit seiner Primärwicklung. Die Sekundärwicklung des Signalgebertransformators 21 besitzt eine Wicklungsmittenanzapfung, die über einen Mittelwertbildner, ein Begrenzerelement 22 und dem Gegenkopplungswiderstand 3 mit den Kathoden der Thyristoren 2sa, 2sb verbunden ist. Die Wicklungsenden der Sekundärwicklung des Signalgeber transformators 21 sind zu den Gittern der Thyristoren 2sa, 2sb geführt. Der Mittelwertbildner weist einen Kondensator 23, einen Widerstand 24 und eine Gleichrichterbrücke 25 auf ; die drei Teile sind zueinander parallel geschaltet. Die Gleichrichterbrücke 25 ist mit der zweiten Ausgangswicklung des Steuertransformators 16 verbunden.

An der Sekundärwicklung des Transformators 1 ist der Begrenzer 8 über einen Strombegrenzungswiderstand 26 mit seinem Zündtransformator 27 angeschlossen.

Der Zündtransformator 27 weist drei Sekundärwicklungen auf. Zwei der Sekundärwicklungen sind jeweils über eine Diode 28, 29 mit einem der Thyristoren 2ba, 2bb verbunden. An der dritten Sekundärwicklung ist ein Gleichrichter 30 in Brückenschaltung angeschlossen. An dem Ausgang des Gleichrichters 30 ist ein Schaltthyristor 31 angeschlossen. Das Gitter des Schaltthyristors 31 ist über eine Zener-Diode 32 zu einem Spannungsteiler 33 geführt. Der Spannungsteiler 33 ist an ein Gleichrichtergerät 34 angeschlossen, das mit der Sekundärwicklung des Transformators 1 verbunden ist.

Die Ausgangsspannung des Transformators 1 gilt als Signalspannung für den Begrenzer 8. Übersteigt der Augenblickswert der Ausgangsspannung einen bestimmten Wert, so wird die Zener-Diode 32 leitend und zündet den Schaltthyristor 31. Dieser schließt die Ausgangswicklung des Zündtransformators 27 über den Gleichrichter 30 kurz. Die beiden anderen Ausgangswicklungen des Zündtransformators 27 geben nun keine Spannung ab und die Thyristoren 2ba, 2bb werden nicht mehr gezündet. Durch die beiden Gleichrichterdioden 7a, 7b wird nun nur noch ein Teil der Sekundärwicklung des Transformators 1 zur Ladung des Akkumulators herangezogen. Sinkt die Ausgangsspannung des Transformators 1 ab, so geht die Zener-Diode 32 bei einem bestimmten Wert der Spannung in den Sperrbereich über, der Schaltthyristor 31 geht bei dem folgenden Spannungsnullpunkt in den Sperrbereich über und die Thyristoren 2ba, 2bb werden wieder wechselweise gezündet.

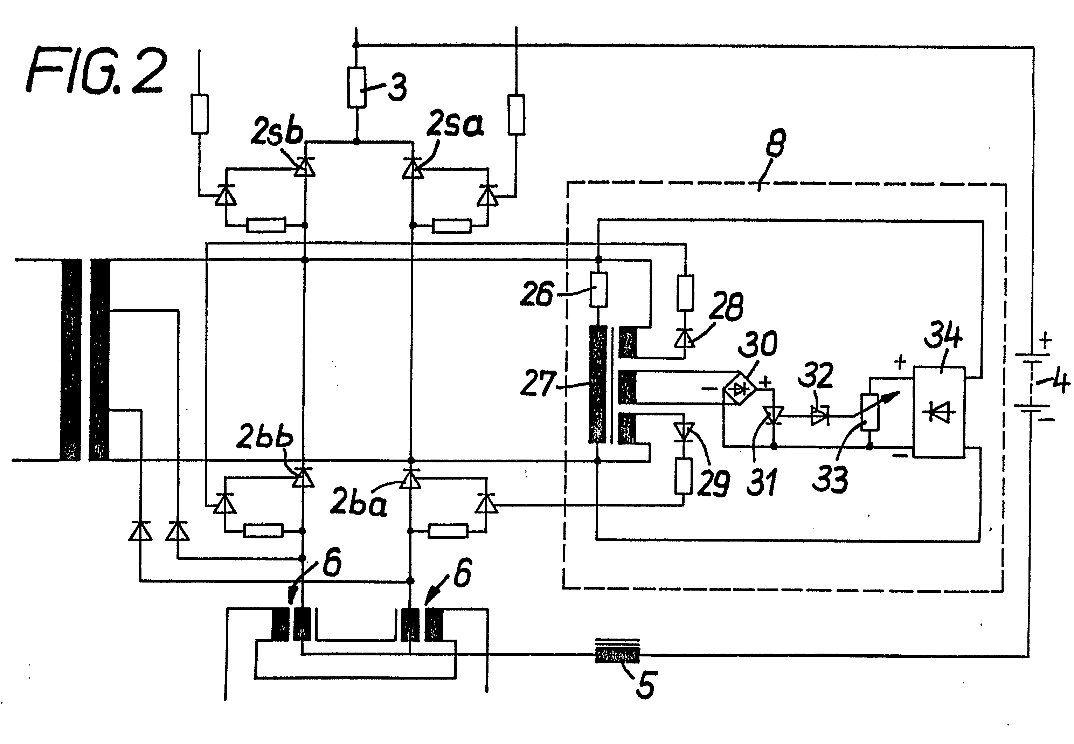

In Fig. 2 ist dargestellt, daß die Thyristoren 2ba, 2bb, 2sa, 2sb mit Hilfszündthyristoren ausgestattet sind. Durch die kleine Ansteuerungsleistungsaufnahme der Hilfszündthyristoren können die Steuereinrichtungen sehr klein dimensioniert werden.

Die Ladestrom- und Ladespannungssteuereinrichtung arbeitet wie folgt :

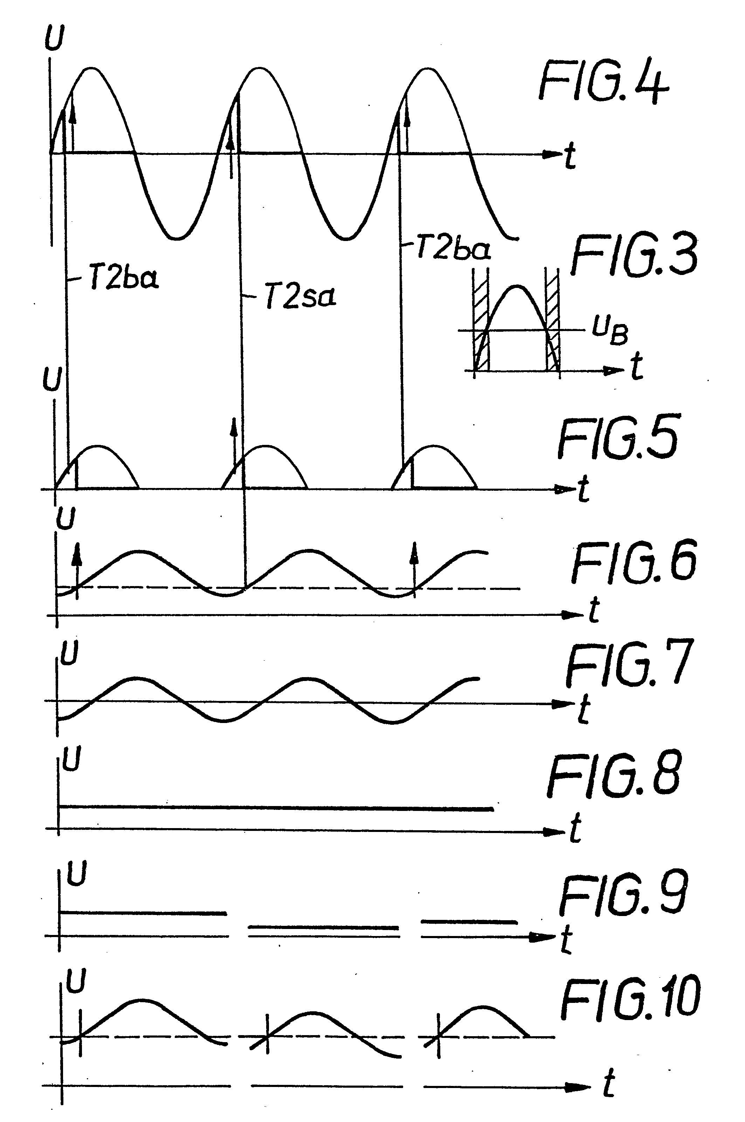

In Fig. 3 ist der Arbeitsbereich bei einer Halbwelle dargestellt. Es wird angenommen, daß die Batteriespannung UB einen bestimmten Wert nicht unterschreitet. Dieser Wert ist durch eine Gerade in Fig. 3 dargestellt und stellt für das Ladegerät eine Gegenspannung dar. Ist die Ausgangsspannung des Ladegerätes kleiner als die Batteriespannung, so kann kein Ladestrom fließen. Die untere Grenze liegt bei 30° und die obere Grenze bei 150°. In diesem Fall liegt der Arbeitsbereich zwischen diesen beiden Werten. Erhöht sich die Batteriespannung, so verkleinert sich der Arbeitsbereich. Für die folgenden Erläuterungen wird zur einfacheren Darstellung die gesamte Halbwelle als Arbeitsbereich angenommen.

In Fig. 4 ist der zeitliche Verlauf der Sekundärspannung (sinusförmig) des Transformators 1 und der Ventilspannung an zwei der in Reihe liegenden Thyristoren 2sa, 2ba dargestellt. Für die beiden anderen Thyristoren 2sb, 2bb gilt entsprechend das gleiche.

In Fig. 8 ist der zeitliche Verlauf der Spannung (Gleichspannung) des Mittelwertgebers dargestellt. In Fig. 7 ist der zeitliche Verlauf der Spannung (cosinusförmig) an einem Wicklungsteil des Signalgebertransformators 21 dargestellt. Die Fig. 6 zeigt eine Überlagerung der Spannungen von Fig. 8 und 7 ; diese Spannung liegt beispielsweise zwischen dem in Fig. 1 dargestellten oberen Wicklungsende der Sekundärwicklung des Signalgebertransformators 21 und dem Ausgang des Mittelwertbildners. Erreicht der Augenblickswert dieser Spannung die Durchbruchspannung der Zener-Diode 22, so wird der Thyristor 2sa angesteuert. Dies ist in Fig. 4 bei der zweiten positiven Halbwelle dargestellt.

In Fig. 5 ist in etwa der zeitliche Verlauf der Ausgangsspannung an einer der Wicklungen des Zündtransformators 27 für den Thyristor 2ba dargestellt. Erreicht der Augenblickswert dieser Spannung einen bestimmten Wert, so wird der Thyristor 2ba gezündet ; dies ist in Fig. 4 bei der ersten und dritten Halbwelle dargestellt. Steigt der Augenblickswert der letztgenannten Spannung auf einen bestimmten Wert an, so geht die Zener-Diode 32 in den Leitzustand über und der Zündtransformator wird kurzgeschlossen. Verkleinert sich der Augenblickswert der Spannung, so geht die Zener-Diode 32 wieder in den Sperrbereich. Dies ist in Fig. 5 nicht dargestellt.

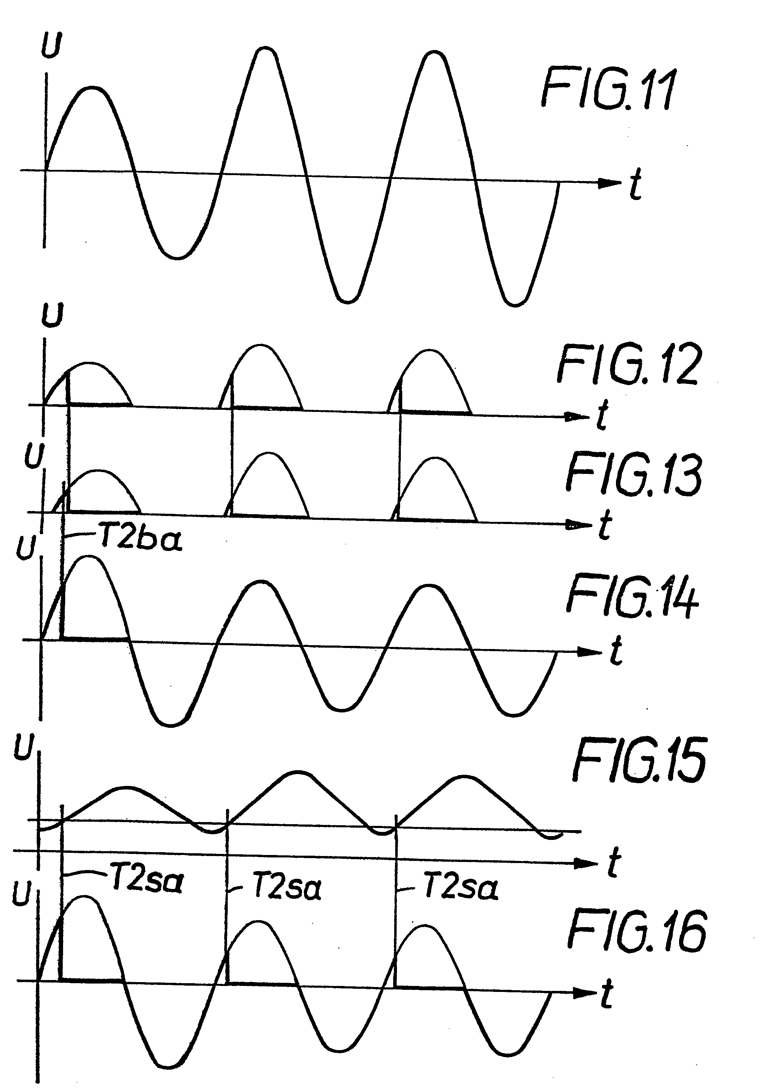

In Fig. 9 ist angedeutet, wie sich die Spannung (drei Beispiele) des Mittelwertbildners ändern kann. Dies wird unten erläutert. Fig. 10 zeigt eine Überlagerung von Fig. 7 und Fig. 8. Durch den unterschiedlichen Verlauf, der bei den drei Beispielen dargestellt ist, wird der Zündzeitpunkt verschoben ; in Beispiel 1 (Fig. 10 links) liegt der Zündzeitpunkt bei 45°, in Beispiel zwei (Fig. 10 mitte) bei etwa 90° und in Beispiel drei (Fig. 10 rechts) bei etwa 70°. Dadurch wird der Mittelwert des Ladestromes bzw. der Ladespannung verändert bzw. gesteuert.

Die Ladestromsteuerung erfolgt mittels der Stromwandler 6. Die hinter den Sekundärwicklungen des Stromwandlers 6 geschaltete Graetzbrücke 9 gibt ein Signal ab, das einen Verlauf hat, der dem Wert des Sinusbetrages entspricht. Dieses Signal gelangt, wenn der Augenblickswert die Durchbruchspannung der Zener-Diode 13 erreicht, zu dem Schaltthyristor 14. Dieser Schaltthyristor 14 schließt den Steuertransformator 16 kurz. Die zweite Sekundärwicklung des Steuertransformators 16 liefert kein Spannungssignal und der Mittelwert des Mittelwertbildners sinkt ab. Dadurch wird — wie in Fig. 10 dargestellt — der Zündzeitpunkt für die Thyristoren 2sa, 2sb größer und der Mittelwert der Ladestromstärke verkleinert sich.

Die Ladespannungssteuerung erfolgt mittels der Batteriespannung des Akkumulators 4 über die Brücke und den Schaltthyristor 14. Erreicht die Batteriespannung einen bestimmten Wert, so wird die Zener-Diode 13 der Brücke leitend und der Schaltthyristor 14 gezündet und der Mittelwert des Mittelwertbildners sinkt — wie oben beschrieben — ab. Dadurch wird der Zündzeitpunkt für die Thyristoren 2sa, 2sb größer und der Mittelwert der Ladespannung verkleinert sich.

Der Spannungsteiler 10 der Ladestromsteuerung ist durch eine Entkopplungsdiode 36 von dem Akkumulator 4 entkoppelt. Damit keine negative Spannung an dem Steuereingang des Schaltthyristors 14, wenn die Zener-Diode 13 sich im Sperrzustand befindet, anfällt, ist eine Sperrdiode 35 eingesetzt. Die Kathoden der Entkopplungsdiode 36 und der Sperrdiode 35 sind miteinander und mit dem Gitter des Schaltthyristors 14 verbunden.

In Fig. 11 bis 16 ist dargestellt, wie das Ladegerät arbeitet, wenn die Netzspannung ansteigt. In Fig. 11 besitzt das Netz zunächst Nennspannung (0 bis 360°), danach steigt die Nennspannung an. In Fig. 12 und Fig. 13 ist dargestellt, wann die Zener-Diode 32 leitend und der Zündtransformator 27 kurzgeschlossen wird. In Fig. 13 ist der Verlauf der Zündspannung einer Ausgangswicklung des Zündtransformators dargestellt. Die Ausgangsspannung des Zündtransformators 27 ist gegenüber der Eingangsspannung bzw. Signalspannung etwas phasenverschoben. Dadurch werden die Thyristoren 2ba, 2bb, wenn die Netzspannung ansteigt nicht mehr gezündet (Fig. 14) und der Stromfluß geht auf die beiden Gleichrichterdioden 7a, 7b über. Damit der Betrag des Ladestromes gleich bleibt, wird der Schaltthyristor 14 nach Maßgabe des Ladestromes etwas später angesteuert. Der Mittelwert der Spannung des Mittelwertbildners erhöht sich. Auch die Ausgangsspannung des Signalgebertransformators 21 erhöht sich. Eine Überlagerung der letztgenannten beiden Spannungen ist in Fig. 15 dargestellt. Durch die Erhöhung dieser Steuerspannung wird der Zündzeitpunkt der Thyristoren 2sa, 2sb kleiner und die Leitdauer der Thyristoren 2sa, 2sb größer. Dies ist in Fig. 16 dargestellt.

**Ansprüche**

1. Einrichtung zum Laden einer Akkumulatorenbatterie (4) aus einem Spannungsschwankungen aufweisenden Wechselstromnetz über eine Brücken- und Gleichrichter-Anordnung mit gesteuerten Gleichrichtern (2sa, 2sb, 2ba, 2bb) mit einem Regler, der die Phasenlage der den gesteuerten Gleichrichtern (2sa, 2sb, 2ba, 2bb) zugeführten Zündspannungen in Abhängigkeit von der Batteriespannung und vom Ladestrom beeinflußt, und mit wenigstens einem der Brücken-Gleichrichter-Anordnung vorgeschalteten Transformator (1), dadurch gekennzeichnet, daß die Sekundärwicklung des Transformators (1) mit Wicklungsanzapfungen ausgestattet ist und daß ein Begrenzer (8) vorgesehen ist, der die Netzspannung als Bezugsgröße verwendet und unterschiedliche Transformator-Übersetzungsverhältnisse wirksam werden läßt, derart, daß bei steigender Netzspannung das Übersetzungsverhältnis wenigstens einmal sprunghaft verkleinert wird, und daß der Regler die Ladestromstärke nach einem Übersetzungssprung derart einregelt, daß die Ladestromstärke nach dem Übersetzungssprung den gleichen Betrag aufweist, den die Ladestromstärke kurze Zeit vor dem Übersetzungssprung hatte.

2. Ladeeinrichtung nach Anspruch 1, dadurch gekennzeichnet, daß der Begrenzer (8) mit zwei strommäßig parallel zueinander liegenden Thyristoren (2ba, 2bb) einer vollgesteuerten, an die Sekundärwicklung des Transformators (1) angeschlossenen Brückenschaltung verbunden ist und daß jeweils eine Gleichrichterdiode (7a, 7b) einerseits an einem der Thyristoren (2ba, 2bb) und andererseits an den Wicklungsanzapfungen des Transformators (1) angeschlossen ist.

3. Ladeeinrichtung nach Anspruch 1, dadurch gekennzeichnet, daß der Begrenzer (8) eine Zener-Diode (32) und einen Zündtransformator (27) aufweist, daß an einer der Sekundärwicklungen des Zündtransformators (27) ein Schaltthyristor (31) angeschlossen ist, der mit der Zener-Diode (32) in Verbindung steht, und daß die Zener-Diode (32) über ein Gleichrichtergerät (34) an der Sekundärwicklung des Transformators (1) angeschlossen ist.

**Claims**

1. Unit for charging a storage battery (4) from an AC supply with fluctuating voltage via a bridge and rectifier circuit with controlled rectifiers (2sa, 2sb, 2ba, 2bb), with a regulator that influences the phase position of the firing voltages supplied to the controlled rectifiers (2sa, 2sb, 2ba, 2bb) as a function of the battery voltage and the charging current with at least one transformer (1) connected before the bridge-rectifier circuit, characterized in that the secondary winding of the transformer (1) has tappings, a limiter (8) uses the supply voltage as reference variable, causing the transformation ratio to be varied in such a way that if the supply voltage rises the transformation ratio is reduced in at least one jump, and the regulator adjusts the charging current after a transformation jump in such a way that after the transformation jump the charging current is the same as shortly before the transformation jump.

2. Charging unit as per claim 1 characterized in that the limiter (8), with two thyristors (2ba, 2bb) arranged in parallel current-wise, is connected to a full-controlled bridge circuit, which is connected to the secondary winding of the transformer (1), and two rectifier diodes (7a, 7b) are each connected to one of the thyristors (2ba, 2bb) and to the winding tappings of the transformer (1).

3. Charging unit as per claim 1 characterized in that the limiter (8) incorporates a breakdown diode (32) and a firing transformer (27) ; a switching thyristor (31), connected to the breakdown diode (32), is connected to one of the secondary windings of the firing transformer (27) and the breakdown diode (32) is connected to the secondary winding of the transformer (1) via a rectifying device (34).

## Revendications

1. Dispositif pour charger une batterie d'accumulateurs (4) à partir d'un réseau à courant alternatif présentant des variations de tension, comportant, d'une part, un dispositif redresseur en pont équipé de redresseurs commandés (2sa, 2sb, 2ba, 2bb) et d'un régulateur, lequel agit sur la position de phase des tensions d'amorçage, dirigées sur les redresseurs commandés (2sa, 2sb, 2ba, 2bb) en fonction de la tension de la batterie et du courant de charge et, d'autre part, un transformateur de charge au moins, intercalé en amont de ce dispositif redresseur en pont, caractérisé en ce que l'enroulement secondaire du transformateur (1) comporte des points de branchement et se trouve relié à un limiteur (8) lequel utilise la tension du réseau en tant que valeur de référence et provoque un certain nombre de rapports de transformation différents, de manière qu'en cas d'accroissement de la tension du réseau le rapport de transformation se trouve, au moins une fois, réduit brusquement et en ce qu'à la suite d'une modification brusque du rapport de transformation, le régulateur assure l'adaptation de l'intensité du courant de charge de manière que celle-ci présente après la modification brusque du rapport de transmission la valeur qui était la sienne très peu de temps avant cette modification.

2. Dispositif selon la revendication 1, caractérisé en ce que le limiteur (8) est relié, par l'intermédiaire de deux thyristors (2ba, 2bb) branchés en parallèle par rapport au sens du courant et constituant un montage en pont entièrement commandé, à l'enroulement secondaire du transformateur (1) et en ce que chacune des diodes à redresser (7a, 7b) est reliée à l'un des thyristors (2ba, 2bb), d'une part, et aux points de branchement du transformateur (1), d'autre part.

3. Dispositif selon la revendication 1, caractérisé en ce que le limiteur (8) est constitué d'une diode de ' Zener (32) et d'un transformateur d'amorçage (27), en ce qu'un thyristor de commutation (31), relié à l'un des enroulements secondaires du transformateur d'amorçage (27) est raccordé à la diode de Zener (32) et en ce que la diode de Zener (32) est reliée à l'enroulement secondaire du transformateur (1) par l'intermédiaire d'un élément redresseur (34).

0 026 866

FIG.2

0 026 866

FIG.4

FIG.3

FIG.5

FIG.6

FIG.7

FIG.8

FIG.9

FIG.10

3

FIG.11

FIG.12

FIG.13

FIG.14

FIG.15

FIG.16

T2ba

T2sa  T2sa  T2sa